# EUROPEAN PATENT SPECIFICATION

(11) **EP 4 562 283 B1**
(45) Date of publication and mention of the grant of the patent: **29.04.2026**
(21) Application number: 23735085.5
(22) Date of filing: 08.06.2023
(51) Int. Cl.: F02B 17/00, F02D 13/02, F02D 41/30, F02D 41/40, F01L 13/00, F02D 41/00, F02B 31/00, F02M 61/08, F02B 31/08, F01L 9/14

(54) **DILUTED-CHARGE, SPARK-IGNITION INTERNAL COMBUSTION ENGINE, AND METHOD FOR CONTROLLING THE SAME**
FREMDGEZÜNDETE BRENNKRAFTMASCHINE MIT VERDÜNNTER LADUNG UND VERFAHREN ZU IHRER STEUERUNG
MOTEUR À COMBUSTION INTERNE À ÉTINCELLE À CHARGE DILUÉE ET SON PROCÉDÉ DE COMMANDE

(30) Priority: 29.07.2022 IT 202200016158
(43) Date of publication of application: 04.06.2025
(73) Proprietor: C.R.F. Società Consortile per Azioni, 10043 Orbassano (Torino) (IT)
(72) Inventor: RICCO, Raffaele, 10043 Orbassano (Torino) (IT); GARGANO, Marcello, 10043 Orbassano (Torino) (IT); STUCCHI, Sergio, 10043 Orbassano (Torino) (IT); MAZZARELLA, Carlo, 10043 Orbassano (Torino) (IT); DE MICHELE, Onofrio, 10043 Orbassano (Torino) (IT)
(74) Representative: Buzzi, Notaro & Antonielli d'Oulx S.p.A.
(86) International application number: PCT/IB2023/055912
(87) International publication number: WO 2024/023600

(56) References cited:
- DE-A1- 102019 113 738
- US-A1- 2004 250 780
- US-A1- 2016 131 058
- US-A1- 2019 093 571
- US-B1- 6 530 361
- US-B2- 6 705 261

## Description

### Field of the invention

This invention relates to spark-ignition internal combustion engines, of the type comprising one or more cylinders and respective pistons sliding within the cylinders between a Top Dead Center (TDC) and a Bottom Dead Center (BDC) and operatively connected to a crankshaft, said engine being configured to perform successive intake, compression, expansion and exhaust stages during each operating cycle in each cylinder,
wherein the engine comprises, for each cylinder:
- a first intake duct and a second intake duct leading into the cylinder and configured to receive air at the same pressure,
- a first intake valve and a second intake valve associated with the cylinder, to control the entry of a flow of intake air into the cylinder from the first intake duct and the second intake duct, respectively, during each operating cycle of the cylinder,
- an actuating device for actuating said first intake valve and said second intake valve,
- a fuel supply system comprising at least one injector associated with each cylinder, and configured and arranged to supply fuel to a combustion chamber defined within the respective cylinder, during each operating cycle of the cylinder, and
- a spark plug associated with each cylinder.

### Prior art

One of the most effective technologies for increasing the efficiency of internal combustion engines is diluted combustion. This expression means a combustion with excess air, which can be obtained with a lean air/fuel mixture and/or with the addition of recirculated exhaust gases (EGR, from "exhaust gas recirculation"). The diluted combustion allows both to reduce the tendency to knocking which results in the possibility of increasing the compression ratio, and the reduction of the combustion temperature which allows to reduce the heat exchanges towards the walls of the combustion chamber and allows to increase the useful work; these advantages are proportional to the dilution level of the air/fuel/EGR mixture.

The main problem associated with (strongly) diluted combustion consists in a very low combustion rate compared to the stoichiometric case without dilution, which involves both a strong combustion instability and, where the combustion duration is excessive, a reduction in the cycle efficiency.

In order to guarantee a robust diluted combustion characterized by high efficiency, one of the methods consists in providing a stratified combustion, making sure that the portion of the combustion chamber closest to the spark plug is characterized by an air/fuel ratio equal or almost equal to the stoichiometric value, while the outermost portion of the combustion chamber, near the cylinder walls, is occupied by an extremely lean mixture: in this way the initial stage of combustion, starting from the moment of ignition, will be characterized by a propagation rate substantially identical to the non-diluted stoichiometric case, and this will allow combustion to be sustained even when the flame front reaches the regions of the combustion chamber with a diluted mixture.

A solution of this type is for example described and illustrated in the document EP 3 517 764 A1 which consists in generating a flow field characterized by a strong swirl to achieve the separation of the non-diluted charge from the diluted one. The main drawback of the above known solution lies in the fact that it is impossible to obtain the desired result under all operating conditions of the engine. Specifically, in the event that the engine has to operate in stoichiometric conditions and at high loads, and not with stratified combustion, there would be the disadvantage which consists in the impossibility of obtaining the same filling of the cylinder with respect to the reference case (the swirl valve has low filling coefficient).

Document US 10,711,708 suggests - for the generation of the flow field characterized by swirl - the use of a valve placed on an intake duct, but in this case the turbulent kinetic energy (TKE) generated during the intake stage would be destined to dissolve instantly, as the dissipation gradient is proportional to the cube itself of the turbulent energy itself: a high TKE is necessary to ensure a high flame propagation rate.

An engine according to the preamble of claim 1 and a method according to the preamble of claim 9 are known from US 2019/093571 A1.

Further solutions are known from US 2004/250780 A1, US 6 530 361 B1, US 6 705 261 B2, US 2016/131058 A1 and DE 10 2019 113738 A1.

### Object of the invention

The main object of this invention is to provide a spark-ignition internal combustion engine which is characterized by high combustion efficiency and stability, even in the presence of a highly diluted mixture, and by reduced harmful exhaust emissions in all operating conditions of the engine.

Furthermore, another object of the invention consists in the possibility of implementing the stratified combustion in a flexible way (that is, which can be activated or deactivated) on the total operating plan of the engine, for example depending on the engine load or the operating conditions (for example cold start).

A further object of the invention is to achieve the aforementioned objectives with relatively simple and low-cost means.

### Summary of the invention

In view of achieving the aforementioned objects, the invention relates to a spark-ignition internal combustion engine having the features of claim 1 and a method having the features of claim 9.

Thanks to the aforementioned features, the following effects are achieved:
- during said first opening period of the two intake valves, the two air flows introduced into the cylinder via the two intake ducts give rise to tumble motions associated with reduced TKE formation (and therefore reduced dissipation) and a high filling index of the cylinder,
- during said second opening period, in which only the first intake valve opens, the flow introduced into the cylinder via a single intake duct gives rise to a swirl motion, with delayed generation of TKE, which has the dual value of optimize the homogeneity of the air/petrol/fuel charge (if previously injected) and to support the combustion rate; moreover the swirl flow also allows a cooling of the hot spots of the combustion chamber, with anti-knocking value,
- said fuel injection after said second opening period creates a portion of air-fuel mixture (and also of EGR if an ERG addition is provided) in the cylinder located in a central position with respect to the cylinder, inside the swirl flow created in said second opening period, characterized by a higher air/fuel equivalence ratio, and kept separate by said swirl flow with respect to the charge introduced in the first opening period, which charge is more adjacent to the cylinder walls.

In one example, the fuel supply system is configured to perform a further fuel injection between the first opening period and the second opening period. This further fuel injection is performed in such a way as to give rise to a mixture with an air/fuel ratio equal to at least1.6 times the stoichiometric ratio (in the absence of EGR, otherwise said ratio will be lower than 1.6 and will depend on the percentage of added EGR: at most, this ratio, referred to the total gas mass in the cylinder at the ignition angle, could be equal to 1, in the case of additions of EGR of the order of 25-35%), while the fuel injection after the second opening period is performed in such a way that the portion of the mixture inside the swirl flow has an air/fuel ratio substantially amounting to the stoichiometric value (or slightly greater if a slightly lean charge has been made at the walls).

In a preferred embodiment, the actuation device for actuating the intake valves is an electronically controlled hydraulic actuation device (for example the device developed by the Applicant and marketed under the trademark "Multi-Air") or a device with electromagnetic or electropneumatic actuators. In each case, the actuation device for actuating the intake valves is configured to change the crank angle at which each intake valve is opened and/or the crank angle at which each intake valve is opened and closed, depending on the engine load, engine speed and other conditions such as - for example - the cold start of the engine.

In this way, it is in particular possible to regulate, depending on engine load and engine speed, the stage and the lift of said first intake valve during said second opening period, which allows to change the intensity of the swirl motion imparted to the charge of air introduced into the cylinder in the second opening period, again depending on engine load and engine speed.

As indicated, the injector device is arranged in the centre of the combustion chamber and the spark plug is preferably arranged adjacent thereto. Thanks to the swirl motion generated by the air charge (or air and EGR if the dilution also takes place by means of recirculated burnt gas) introduced in the second opening period, the mixture is substantially a stoichiometric mixture in the central zone in proximity of the injector and to the spark plug, while it is a highly diluted mixture in the outermost zones of the combustion chamber, which drastically reduces losses due to cooling resulting from contact with the cylinder walls.

The volume of the combustion chamber characterized by less dilution with air and petrol in a ratio close to the stoichiometric value, in proximity of the spark plug, allows a first combustion period characterized by a high combustion rate, also thanks to the TKE generated by the delayed opening of the intake valve: in this way the combustion will be stable even when the flame propagation arrives in the diluted regions.

The invention also relates to the engine control method described above.

### Detailed description of the invention

Further features and advantages of the invention will become apparent from the following description with reference to the attached drawings, provided purely by way of non-limiting example, in which:
- figure 1 is a schematic perspective view of the combustion chamber of a cylinder of the internal combustion engine according to the invention,
- figure 2 is a schematic sectional view of the combustion chamber of the cylinder of the engine according to the invention,
- figure 3 shows a diagram of a variable actuation system of the intake valves of the known type developed by the Applicant and marketed under the trademark "Multi-Air", which can be used in the engine according to the invention,
- figure 4 shows the diagrams of the lift of the two intake valves associated with each cylinder of the engine according to the invention,
- figure 5 is a diagram showing the change of the air mass (or air and possible EGR) introduced into the cylinder, by the intake ducts, as a function of the crank angle, in comparison with a conventional solution,
- figure 6 is another diagram showing the change of the airflow rate entering the cylinder (expressed in Kg/s) as a function of the crank angle, in comparison with a conventional solution,
- figures 7, 8, 9 are diagrams showing the change of the tumble index, swirl index and cross-tumble index as a function of the crank angle which is recorded in an embodiment of the engine according to the invention, in comparison with a conventional solution,
- figure 10 is a further diagram showing the change of the Turbulent Kinetic Energy (TKE) as a function of the crank angle, in the case of an embodiment of the engine according to the invention, in comparison with a conventional solution,
- figure 11 is a diagram showing the fuel injection strategy in the engine according to the invention,
- figure 12 is a further schematic view of the combustion chamber of the engine according to the invention,
- figure 13 shows a further example of fuel injection strategy in the engine according to the invention.

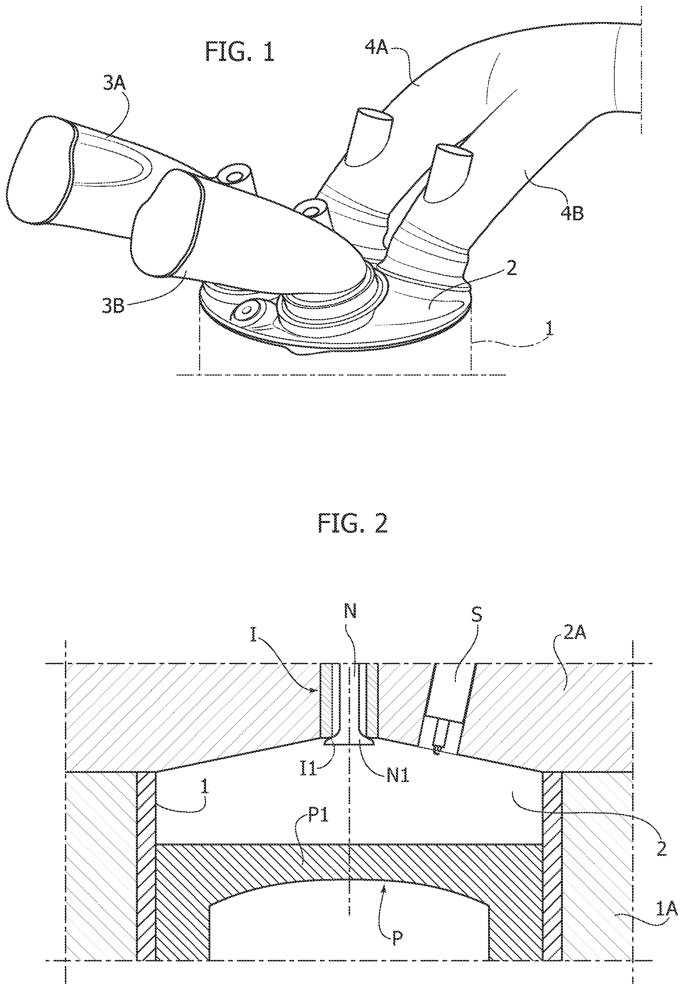

In figure 1, the reference 1 indicates a cylinder of a spark-ignition internal combustion engine, according to the invention, defined in a manner known per se within an engine block, to which a combustion chamber 2 is associated, defined in a cylinder head of the engine. Two intake ducts 3A, 3B lead into the combustion chamber 2 and are shaped and arranged according to any known technique, so as to introduce respective air flows into the cylinder 1, generating, when the two intake valves are opened simultaneously and identically, a flow field characterized only by tumble components, said ducts being configured to maximize the filling of the cylinder without producing turbulence. The two intake ducts 3A, 3B communicate with a common intake manifold (not shown) in such a way as to both receive air at the same pressure. The two ducts 3A, 3B are reconfigured and arranged in such a way that the two air flows introduced by them into the cylinder tend to have components suitable for favoring the filling of the cylinder, rather than the generation of turbulence. Specifically, said ducts are such as to generate, when the valves open with substantially identical laws of motion, a flow field characterized only by tumble.

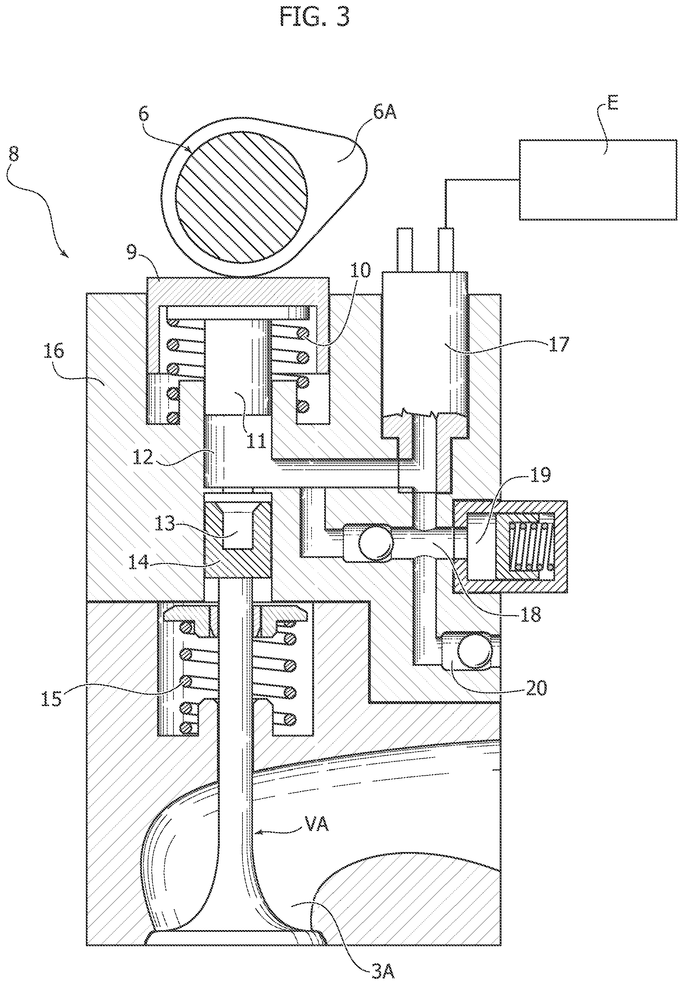

According to the conventional technique, the two intake ducts 3A, 3B are associated with two respective intake valves VA and VB, one of which can be seen for example in figure 3. The valves VA and VB are of the conventional poppet type, with stem and circular head.

Also associated with each cylinder 1 are two exhaust ducts 4A, 4B (figure 1) communicating with an exhaust manifold.

Figure 2 shows the engine block 1A within which the cylinder 1 is defined, and the piston P (schematically showed) slidably mounted within the cylinder 1 and having a piston head P1 facing the combustion chamber 2. The reference 2A indicates the cylinder head, defining the combustion chamber 2.

The fuel supply system is a supply system of any known type, comprising, for each cylinder, a fuel injector I. Figure 2 shows only the nozzle end part of the injector I; the injector I is able to introduce both liquid and gaseous fuel.

An important feature of the engine according to the invention is that the injector I is arranged in the center of the combustion chamber 2. A spark plug S of any known type is also mounted in the cylinder head 2A so as to have its electrodes, also substantially in the center of the combustion chamber 2, adjacent to the nozzle of the injector I.

As shown schematically in figure 2, the injector I is preferably of the type comprising an injector needle N, having an enlarged cone-shaped terminal head N1, arranged outside the outlet I1 of the nozzle of the injector I. According to the conventional technique, the injector I has an electromagnetic actuator which is capable of imparting an outwardly movement to the injector needle N, which causes the cone-shaped head N1 to move away from the outlet I1 of the injector nozzle, to allow the fuel injection into the combustion chamber 2. A particular type of injector I which is suitable for the application illustrated here has been developed by the Applicant and has been the subject of the Italian patent applications IT 10 2022 0000 13627 and IT 10 2022 0000 13636, both filed on 06.28.2022. This injector has an injector needle actuated by an electromagnetically controlled hydraulic servo-valve. Alternatively, an injector characterized by a nozzle with outflow holes is still an acceptable solution.

In a preferred exemplary embodiment, the invention is applied to an internal combustion engine equipped with a variable actuation system of the engine intake valves of the type developed by the same Applicant and marketed under the trademark Multi-Air.

Figure 3 shows schematically an example of the Multi-Air variable actuation system. In this case, each of the intake valves VA, VB (figure 3 shows the device associated with the valve VA) is actuated by a respective cam 6A of a camshaft 6 of the engine by means of an electronically controlled hydraulic device 8. The cam 6 actuates a tappet 9 kept in contact with the cam 6 by a return spring 10. The tappet 9 is associated with the piston 11 of a master cylinder which transfers pressurized fluid from a chamber 12 to the chamber of a slave cylinder 13 whose piston 14 serves as an actuator of the intake valve VA. The intake valve VA is recalled by a spring 15 towards a closed position of the intake duct 3A. All of the above components are carried by the engine cylinder head structure 16. An electronically controlled valve 17 is controlled by an electronic control unit E. When the electronically controlled valve is in a closed condition, it interrupts the communication between the pressurized fluid chamber 12 and a low pressure space 18, communicating with a fluid accumulator 19 and with an inlet 20 intended to be in communication with the engine lubrication circuit. If the electronically controlled valve 17 is in the closed condition, the pressurized fluid chamber 12 is isolated, whereby the movements of the tappet 9 imparted by the cam 6 can be transferred, via the fluid in the chamber 12 and the slave cylinder 13, to the intake valve VA. In a condition in which the cam 6 is keeping the intake valve VA open, an opening of the electronically controlled valve 17 actuated by the electronic control unit L causes the discharge of the pressurized fluid chamber 12 and the consequent closure of the valve intake VA due to the effect of the return spring 15. In this condition, the intake valve VA is insensitive to the movements of the tappet 9 imparted by the cam 6.

This description is provided here purely as an indication of the basic operating principle of the Multi-Air system. The Applicant has developed various embodiments of this system which have been the subject of various patent publications.

However, it is understood that the invention can also be used in combination with variable actuation systems for actuating the intake valves of different types, for example electromagnetic or electropneumatic actuation systems.

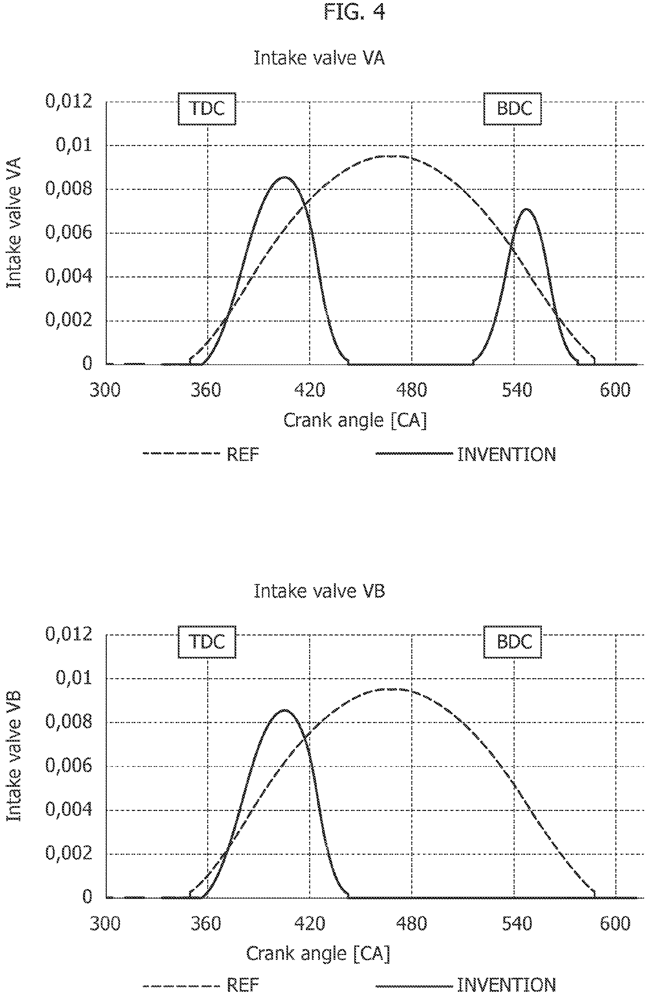

Thanks to the arrangement, for each of the two intake valves VA, VB of each cylinder, of a variable actuation system, for example of the Multi-Air type, it is possible to implement the strategy for opening the intake valves which is one of the fundamental elements of this invention. This strategy is shown in figure 4 of the accompanying drawings, with reference to an example. The upper diagram of figure 4 shows the lift profiles of the first intake valve VA, while the lower diagram of figure 4 shows the lift profile of the second intake valve VB.

In both diagrams, the dashed line shows the lift profile of each intake valve which is achieved in a conventional solution, with mechanical actuation of the intake valves. The dashed line profile substantially corresponds to the lift profile determined by a cam similar to the one illustrated in figure 3, cooperating with the tappet 9.

In the above diagrams, the abscissa axis shows the crank angle values. According to the convention adopted, when the piston of a given cylinder is at TDC, at the beginning of the conventional intake stage of the operating cycle in the cylinder, the crank angle is equal to 360°. With reference again to the conventional solution, at the end of the intake stage, when the piston has reached the BDC, the crank angle is equal to 540°.

According to the invention, the variable actuation device of the two intake valves VA and VB is configured in such a way that it achieves a first opening period, which in the example shown in figure 4 starts at a crank angle substantially equal to 360° and ends at a crank angle around 440°, where both inlet valves VA and VB are first opened and then closed with the same law. As can be seen, the lift diagram of each intake valve is very steep, both during opening and during closure, and would in practice be unattainable with a conventional system of the mechanical type, in which the lift profile is determined by the cam profile.

With reference again to the engine according to the invention, as can therefore be seen, a first opening period is achieved in which both intake valves are substantially opened when the piston of the respective cylinder is at TDC, at the beginning of the intake stage, and are closed when the piston is at an intermediate point in the descent from the TDC to the BDC.

Still according to the invention, a second opening period is achieved, in which only the first intake valve VA is first opened and then closed again, while the second intake valve VB remains closed. As can be seen in figure 4, in the case of the illustrated example, the second opening period, in which only the intake valve VA is opened, starts in proximity of the BDC (in the example around 520°) and ends when the piston is already ascending from BDC to TDC, i.e. in the subsequent compression stage (in the example at an angle around 580°).

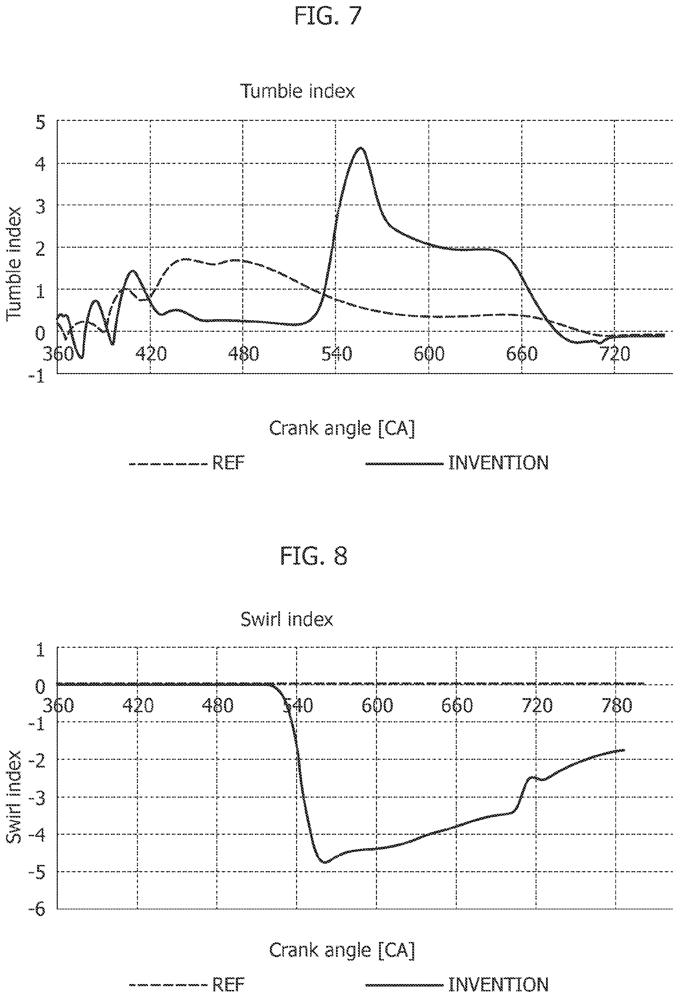

The strategy for opening the intake valves, implemented according to this invention, is aimed at obtaining a series of specific effects. During the first opening period, when both the intake valves VA and VB are opened, the air flows introduced through the intake ducts 3A, 3B have only tumble components, and are adapted to maximize filling. Conversely, in the second opening period, when only the intake valve VA is opened, the air flow introduced through a single intake duct takes a swirl component in the cylinder (see figure 8, in the range following 540° of the crank angle). In the diagrams of figures 7, 8 and 9 the changes of the tumble, swirl and cross-tumble index are shown in comparison with a conventional solution (dashed line) in which both intake valves together follow a conventional lift profile, corresponding to the profile of their drive cam.

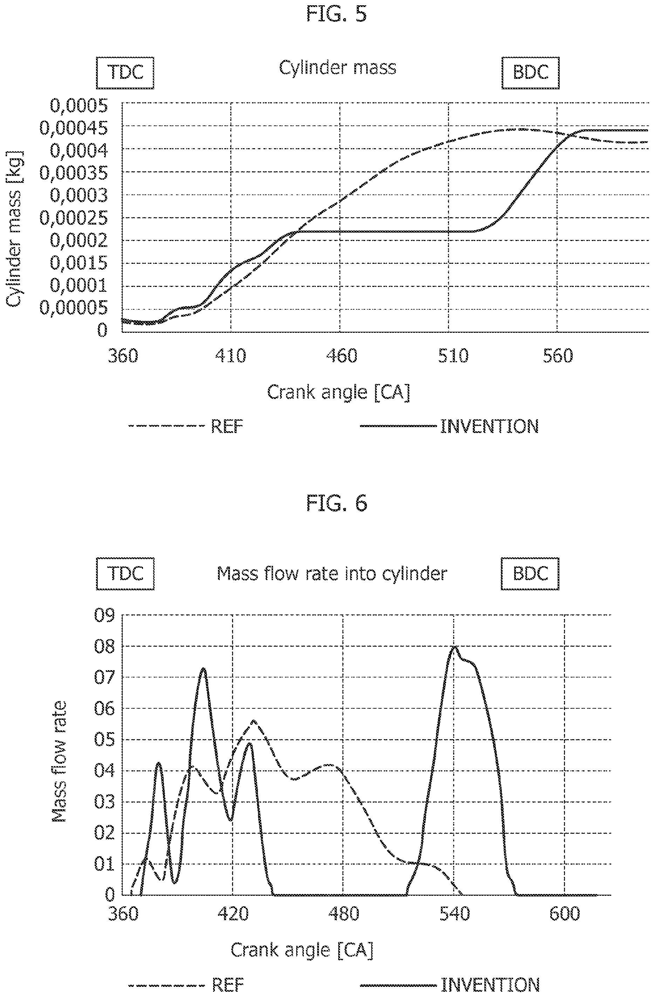

Figure 5 shows the change of the mass of air introduced into the cylinder as a function of the crank angle, in the case of the valve opening strategy according to figure 4, i.e. according to the teachings of this invention, in comparison with the change of the air charge in a conventional solution (shown with dashed line). The same comparison is indicated in figure 6, but with reference to the introduced airflow rate (in Kg/s).

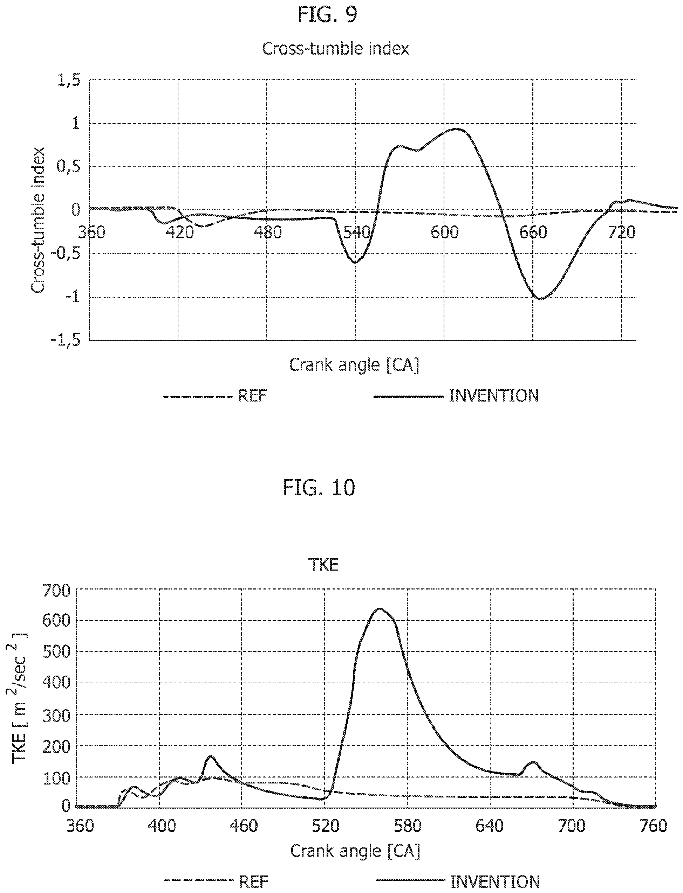

Figure 10 is a diagram showing the change of turbulent kinetic energy in the engine according to the invention (solid line) and a conventional solution (dashed line). The effect of the strategy for opening the inlet valves shown in figure 4 is positive and has two main advantages: firstly, such a high TKE favors the mixing of the fuel introduced during the compression stage, and secondly, at a crank angle of 710°, i.e. when the piston is close to TDC and the spark plug is fired, the TKE is about double that of the conventional engine. As mentioned, this greater TKE, possible only thanks to the late opening/closing of the valve VA, allows for an increase in the flame propagation rate, during the first combustion period (for example defined by the combustion of 30% of the total fuel mass) even more than in the reference case with undiluted mixture: this high - initial - flame propagation rate will support the combustion of the volume with a diluted mixture.

In order to obtain the advantages pursued by this invention, it is necessary to combine the strategy for opening the intake valves which has been described above with a specific fuel injection strategy.

In the engine according to the invention, the fuel supply system is configured to perform at least one fuel injection, through the central injector I, after said second opening period, when the piston of the respective cylinder is ascending from BDC to TDC.

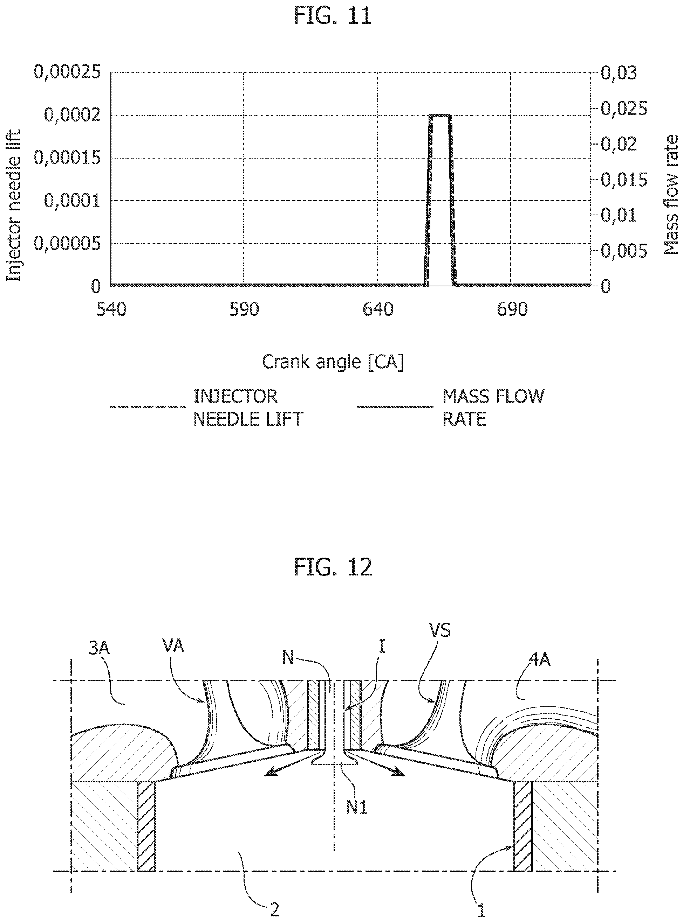

In the example shown in figure 11, the injection is provided substantially around the 660° of the crank angle. Figure 11 shows the lift profile of the injector needle with a solid line, while the change of the injected fuel flow rate (in Kg/s) is shown with a dashed line. The injection start angle (SOI) and the duration of the injection itself depend on various factors, for example the mass to be introduced, type of fuel (liquid or gaseous), injection pressure, engine speed, engine load, desired equivalence ratio in proximity of the spark plug, % EGR, combustion chamber temperature (for example, relevant for cold start).

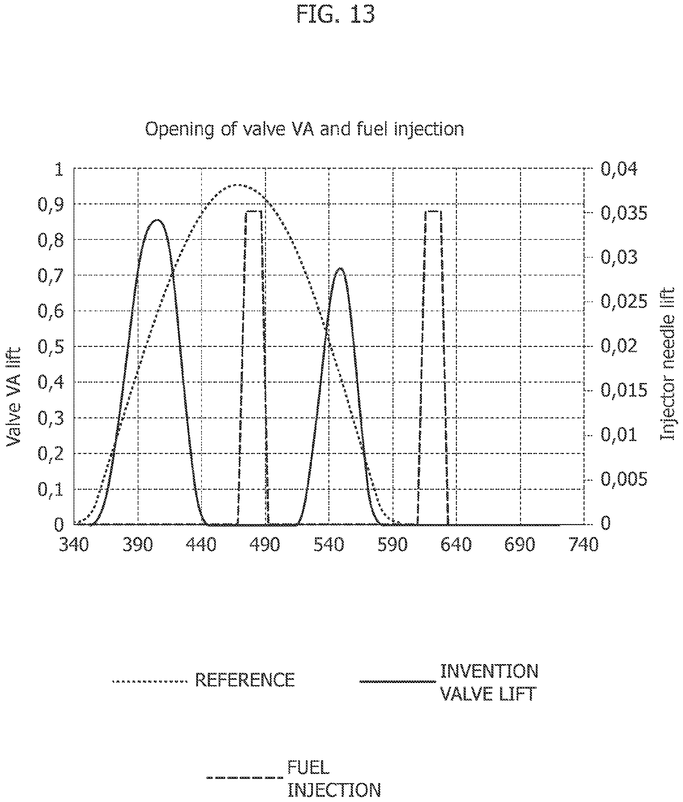

In the variant shown in figure 13, before said injection following the second opening period, a further injection is provided in a range of the crank angle comprised between the first opening period and the second opening period of the intake valves.

Preferably, in the injection performed just after the first opening period of the intake valves, the fuel is injected in such a way as to give rise to a highly diluted mixture, i.e. with an air/fuel ratio equal to at least 1.5 - 2 times the stoichiometric ratio in the case of absence of EGR, or lower values if EGR is also introduced in addition to the excess air (as extreme case, the stoichiometric value can be obtained, however, with high percentages of EGR). On the contrary, in the second injection, i.e. in the injection which is performed after the second opening period, in which a single intake valve opens, the fuel introduced is such as to create a mixture with a value close to the stoichiometric ratio in the axial position with respect to the cylinder, and therefore in proximity of the spark plug. This subsequent fuel injection is performed when a swirl motion of the charge introduced during the second opening period has already been established in the cylinder, in which only one intake valve opens. Consequently, in the combustion chamber a central zone is created, in an axial position with respect to the cylinder, adjacent to the injector and the spark plug, in which an air/fuel ratio substantially close to the stoichiometric value is achieved, while in the outermost region, in proximity of the cylinder walls, the mixture obtained is a highly diluted mixture which remains separated by the swirl vortex itself with respect to the stoichiometric mixture which is at the centre of the combustion chamber.

Thanks to these features, and above all also thanks to the higher TKE that is present in the combustion chamber at ignition, the combustion propagation is considerably faster than in the case with actuation of the standard valves: ultimately the robustness of the combustion is guaranteed even with highly diluted charge.

Combustion is therefore characterized by a high initial combustion rate, which guarantees robustness of the combustion even when the flame front reaches the region with a highly diluted mixture. The average combustion temperature is lower than in the case of combustion of an undiluted mixture and the losses due to the heat transferred to the walls during combustion, caused by the contact of the burnt gases with the cylinder walls, are minimized. When the spark plug is fired, an efficient combustion of the central portion of the mixture is achieved, which corresponds to the stoichiometric value, resulting in a combustion propagation to the outermost regions of the combustion chamber, where the mixture is highly diluted.

As already indicated, the lift profiles of the intake valves required for this invention (see figure 4) need the use of a variable actuation device which is capable of performing the two sequential opening and closing cycles of the first intake valve in a range of 200°-240° of the crank angle and is capable of achieving each lift profile of each intake valve with a very steep up and down ramp (i.e. with an almost rectangular profile).

The variable actuation system of the engine valves allows to change the opening stage of the first intake valve during said second opening period, depending on engine load and engine speed. In this way it is possible to adjust very efficiently the swirl level established in the second opening period in each operating condition of the engine. The result is that the engine according to the invention is capable of drastically reducing losses due to the heat transferred to the walls deriving from the contact of the burnt gases in the combustion chamber with the cylinder walls.

Another advantage consists in the high flexibility of the system, such that, based on the engine operating conditions and the environmental conditions (for example cold start), it is possible to carry out combustions of diluted or non-diluted mixtures, and in the case of diluted mixtures, change the intensity of the swirl and of the TKE generated depending upon the dilution level obtained by changing the equivalence ratio and the EGR quantity (if introduced).

A further advantage derives from the use of a central injector with an injector needle having an outwardly opening movement, with a cone-shaped head which produces a radial jet substantially according several radial directions almost perpendicular to the cylinder axis, which reduces the penetration of the jet or spray, so as to avoid wetting the piston crown or the cylinder walls, resulting in the formation of particulates and HC.

Of course, the principle of the invention remaining the same, the construction details and embodiments may change widely with respect to what is described and illustrated purely by way of example, without thereby departing from the scope of this invention, as defined in the appended claims

A variant of the invention consists in using, in combination, a direct injection system and an indirect one, for example with injectors placed on the intake ducts: in this way the first portion of fuel (for example 80-90% of the total mass) can be introduced mixed with air during the first opening period of the intake valves, while the formation of the stoichiometric mixture is left to the sole actuation of the injector placed in the combustion chamber. This solution is particularly suitable for those applications on hybrid vehicles, in which the internal combustion engine is characterized by frequent switching off and on, with consequent cooling of the combustion chamber while the vehicle is running: this leads to an increase in emissions if the fuel (liquid) is all injected with direct injector (condensation of the drops on the walls).

In particular, the solution of injecting the fuel initially with injectors placed on the intake manifolds and the second part with a direct injector is suitable if one wants to burn two different types of fuel, for example one could inject 80-90% of the total gaseous type fuel (CNG or H2 for example) with low pressure injectors, external to the combustion chamber, and the remaining 10-20% of fuel - for example gasoline or diesel fuel - during the compression stroke. This may be necessary as high pressure injectors for gaseous fuels are characterized by high costs and low robustness (for example, due to steel embrittlement by hydrogen).

All of the above also applies if, in the first opening period, the two valves have opening laws that are not identical, but similar at least as regards the values of the opening and closing angles.

## Claims

1. Spark-ignition internal combustion engine, comprising one or more cylinders (1) and respective pistons sliding within the cylinders between a TDC and a BDC and operatively connected to a crankshaft, said engine being configured to implement successive intake, compression, expansion and exhaust stages during each operating cycle in each cylinder,
wherein the engine comprises, for each cylinder:
- a first intake duct (3A) and a second intake duct (3B) leading into the cylinder and configured to receive air at the same pressure,
- a first intake valve (VA) and a second intake valve (VB) associated with the cylinder (1), to control the entry of a flow of intake air into the cylinder from the first intake duct (3A) and the second intake duct (3B), respectively, during each operating cycle of the cylinder,
- an actuating device (6) for actuating said first intake valve (VA) and said second intake valve (VB),
- a fuel supply system comprising at least one injector associated with each cylinder, and configured and arranged to supply fuel to a combustion chamber defined within the respective cylinder, during each operating cycle of the cylinder, and
- a spark plug associated with each cylinder,
wherein:
- said actuating device for actuating said first intake valve (VA) and said second intake valve (VB) is configured to provide, in each operating cycle of the cylinder, at least under certain engine operating conditions:
- a first opening period, in which both intake valves (VA, VB) are opened and a second opening period, in which only a first intake valve (VA), of said two intake valves, is opened, while the second intake valve (VB) remains closed,
- said injector is arranged substantially in the centre of the respective combustion chamber,
- said fuel supply system is configured to perform at least one fuel injection, via said injector, in each operating cycle of each cylinder, after said second opening period, when the piston of the respective cylinder is ascending from BDC to TDC,
said engine being **characterized in that** said actuating device for actuating said first intake valve (VA) and said second intake valve (VB) is configured in such a way that:
- in said first opening period the two intake valves (VA, VB) open when the piston of the respective cylinder is close to TDC and close when the piston is at an intermediate point in the descent from TDC to BDC,
- in said second opening period said first intake valve (VA) opens when the piston of the respective cylinder is in the vicinity of the BDC, and closes when the piston is ascending from the BDC towards the TDC.

2. Engine according to claim 1, **characterized in that** said fuel supply system is configured to perform an additional fuel injection before the second opening period.

3. Engine according to claim 2, **characterized in that** said additional fuel injection is carried out in such a way as to generate a mixture with an air/fuel ratio amounting to at least 1.6 times the stoichiometric ratio, while the fuel injection after the second opening period is carried out in such a way that a portion of the mixture within a swirl flow has an air/fuel ratio substantially amounting to the stoichiometric value.

4. Engine according to claim 1, **characterized in that** said at least one fuel injection is carried out at a crank angle in a range between 670° and 710°, wherein a crank angle of 360° corresponds to the Top Dead Center at the beginning of the intake stage.

5. Engine according to claim 3, **characterized in that** said fuel supply system is configured to perform the additional fuel injection between a crank angle of 420° and a crank angle of 550°, wherein a crank angle of 360° corresponds to the Top Dead Center at the beginning of the intake stage.

6. Engine according to claim 1, wherein the actuating device for actuating intake valves is an electronically controlled hydraulic actuating device (8) or a device with electromagnetic or electropneumatic actuators and is configured to change, in said second period opening, the crank angle at which the first intake valve opens and/or the crank angle at which the first intake valve closes and/or the intake valve lift, depending upon the engine load and the engine speed.

7. Engine according to claim 1, **characterized in that** the injector associated with each cylinder is arranged in the centre of the combustion chamber associated with the cylinder.

8. Engine according to claim 1, **characterized in that** with each cylinder there is associated a spark plug arranged near the centre of the combustion chamber.

9. Method for controlling a spark-ignition internal combustion engine, comprising one or more cylinders (1) and respective pistons sliding within the cylinders between a TDC and a BDC and operatively connected to a crankshaft, said engine being configured to actuate successive intake, compression, expansion and exhaust stages during each operating cycle in each cylinder,
wherein the engine comprises, for each cylinder:
- a first intake duct (3A) and a second intake duct (3B) leading into the cylinder and configured to receive air at the same pressure,
- a first intake valve (VA) and a second intake valve (VB) associated with the cylinder (1), to control the entry of a flow of intake air into the cylinder from the first intake duct (3A) and the second intake duct (3B), respectively, during each operating cycle of the cylinder,
- an actuating device (6) for actuating said first intake valve (VA) and said second intake valve (VB),
- a fuel supply system comprising at least one injector associated with each cylinder, and configured and arranged to supply fuel to a combustion chamber defined within the respective cylinder, during each operating cycle of the cylinder, and
- a spark plug associated with each cylinder,
wherein said method comprises:
- providing, by means of said actuating device for actuating said first intake valve (VA) and said second intake valve (VB), in each operating cycle of the cylinder, at least under certain engine operating conditions, a first opening period, in which both intake valves (VA, VB) are opened, and a second opening period, in which only a first intake valve (VA), of said two intake valves, is opened, while the second intake valve (VB) remains closed,
- performing a fuel injection in each operating cycle of each cylinder, after said second opening period, when the piston of the respective cylinder is ascending from BDC towards TDC, by means of an injector which is arranged substantially in the centre of the respective combustion chamber,
said method being **characterized in that**:
- in said first opening period the two intake valves (VA, VB) open when the piston of the respective cylinder is close to TDC and close when the piston is at an intermediate point in the descent from TDC to BDC,
- in said second opening period said first intake valve (VA) opens when the piston of the respective cylinder is in the vicinity of the BDC, and closes when the piston is ascending from the BDC towards the TDC.

10. Method according to claim 9, **characterized in that** it comprises performing an additional fuel injection between the first opening period and the second opening period.

11. Method according to claim 10, **characterized in that** said additional fuel injection is carried out in such a way as to generate a mixture with an air/fuel ratio amounting to at least 1.6 times the stoichiometric ratio, while the fuel injection after the second opening period is carried out in such a way that a portion of the mixture within the swirl flow has an air/fuel ratio substantially amounting to the stoichiometric value.

12. Method according to claim 10, **characterized in that** it comprises introducing EGR into the cylinder to dilute the mixture.

13. Method according to claim 12, **characterized in that** the entire cylinder is occupied by an air/fuel mixture according to a stoichiometric ratio or according to a ratio higher than the stoichiometric one, and that EGR is added in a percentage between 25% and 35% of the mixture volume.

14. Method according to claim 11, **characterized in that** a percentage between 80% and 90% of the total fuel mass is introduced by said additional fuel injection.

15. Method according to claim 10, **characterized in that** at least 80% of the fuel mass is introduced by one or more injector devices located in the intake ducts (3A, 3B), upstream of the intake valves (VA, VB).

## Patentansprüche

1. Verbrennungsmotor mit Fremdzündung, umfassend einen oder mehrere Zylinder (1) und jeweilige Kolben, die sich innerhalb der Zylinder zwischen einem OT und einem UT bewegen und betriebsmäßig mit einer Kurbelwelle verbunden sind, wobei besagter Motor konfiguriert ist, um in jedem Betriebszyklus in jedem Zylinder aufeinanderfolgende Ansaug-, Verdichtungs-, Expansions- und Auslassphasen zu implementieren,
wobei der Motor für jeden Zylinder umfasst:
- einen ersten Ansaugkanal (3A) und einen zweiten Ansaugkanal (3B), die in den Zylinder führen und konfiguriert sind, um Luft mit demselben Druck aufzunehmen,
- ein erstes Einlassventil (VA) und ein zweites Einlassventil (VB), die dem Zylinder (1) zugeordnet sind, um den Eintritt eines Ansaugluftstroms in den Zylinder aus dem ersten Ansaugkanal (3A) bzw. dem zweiten Ansaugkanal (3B) während jedes Betriebszyklus des Zylinders zu steuern,
- eine Betätigungsvorrichtung (6) zum Betätigen besagten ersten Einlassventils (VA) und besagten zweiten Einlassventils (VB),
- ein Kraftstoffversorgungssystem, das mindestens einen Injektor umfasst, der jedem Zylinder zugeordnet ist, und konfiguriert und angeordnet ist, um Kraftstoff in einen Brennraum zu liefern, der innerhalb des jeweiligen Zylinders definiert ist, während jedes Betriebszyklus des Zylinders, und
- eine Zündkerze, die jedem Zylinder zugeordnet ist,
wobei:
- besagte Betätigungsvorrichtung zum Betätigen besagten ersten Einlassventils (VA) und besagten zweiten Einlassventils (VB) konfiguriert ist, um in jedem Betriebszyklus des Zylinders, zumindest unter bestimmten Motorbetriebsbedingungen, bereitzustellen:
- eine erste Öffnungsperiode, in der beide Einlassventile (VA, VB) geöffnet sind, und eine zweite Öffnungsperiode, in der nur ein erstes Einlassventil (VA) der besagten zwei Einlassventile geöffnet ist, während das zweite Einlassventil (VB) geschlossen bleibt,
- besagter Injektor im Wesentlichen in der Mitte des jeweiligen Brennraums angeordnet ist,
- besagtes Kraftstoffversorgungssystem konfiguriert ist, um mindestens eine Kraftstoffeinspritzung über besagten Injektor in jedem Betriebszyklus jedes Zylinders nach besagter zweiter Öffnungsperiode durchzuführen, wenn sich der Kolben des jeweiligen Zylinders vom UT zum OT aufwärts bewegt,
wobei besagter Motor **dadurch gekennzeichnet ist, dass** besagte Betätigungsvorrichtung zum Betätigen besagten ersten Einlassventils (VA) und besagten zweiten Einlassventils (VB) so konfiguriert ist, dass:
- in besagter ersten Öffnungsperiode die beiden Einlassventile (VA, VB) öffnen, wenn sich der Kolben des jeweiligen Zylinders in der Nähe des OT befindet, und schließen, wenn sich der Kolben an einem Zwischenpunkt im Abstieg vom OT zum UT befindet,
- in besagter zweiten Öffnungsperiode besagtes erstes Einlassventil (VA) öffnet, wenn sich der Kolben des jeweiligen Zylinders in der Nähe des UT befindet, und schließt, wenn sich der Kolben vom UT in Richtung OT aufwärts bewegt.

2. Motor nach Anspruch 1, **dadurch gekennzeichnet, dass** besagtes Kraftstoffversorgungssystem konfiguriert ist, um eine zusätzliche Kraftstoffeinspritzung vor der zweiten Öffnungsperiode durchzuführen.

3. Motor nach Anspruch 2, **dadurch gekennzeichnet, dass** besagte weitere Kraftstoffeinspritzung so durchgeführt wird, dass ein Gemisch mit einem Luft-Kraftstoff-Verhältnis von mindestens dem 1,6-fachen des stöchiometrischen Verhältnisses erzeugt wird, während die Kraftstoffeinspritzung nach der zweiten Öffnungsperiode so durchgeführt wird, dass ein Teil des Gemischs innerhalb einer Drallströmung ein Luft-Kraftstoff-Verhältnis im Wesentlichen in Höhe des stöchiometrischen Wertes aufweist.

4. Motor nach Anspruch 1, **dadurch gekennzeichnet, dass** besagte mindestens eine Kraftstoffeinspritzung bei einem Kurbelwinkel in einem Bereich zwischen 670° und 710° durchgeführt wird, wobei ein Kurbelwinkel von 360° dem oberen Totpunkt zu Beginn der Ansaugphase entspricht.

5. Motor nach Anspruch 3, **dadurch gekennzeichnet, dass** besagtes Kraftstoffversorgungssystem konfiguriert ist, um die zusätzliche Kraftstoffeinspritzung zwischen einem Kurbelwinkel von 420° und einem Kurbelwinkel von 550° durchzuführen, wobei ein Kurbelwinkel von 360° dem oberen Totpunkt zu Beginn der Ansaugphase entspricht.

6. Motor nach Anspruch 1, wobei die Betätigungsvorrichtung zum Betätigen der Einlassventile eine elektronisch gesteuerte hydraulische Betätigungsvorrichtung (8) oder eine Vorrichtung mit elektromagnetischen oder elektropneumatischen Stellgliedern ist und konfiguriert ist, um in besagter zweiten Öffnungsperiode den Kurbelwinkel, bei dem das erste Einlassventil öffnet, und/oder den Kurbelwinkel, bei dem das erste Einlassventil schließt, und/oder den Ventilhub des Einlassventils in Abhängigkeit von der Motorlast und der Motordrehzahl zu ändern.

7. Motor nach Anspruch 1, **dadurch gekennzeichnet, dass** der jedem Zylinder zugeordnete Injektor in der Mitte des dem Zylinder zugeordneten Brennraums angeordnet ist.

8. Motor nach Anspruch 1, **dadurch gekennzeichnet, dass** jedem Zylinder eine Zündkerze zugeordnet ist, die in der Nähe der Mitte des Brennraums angeordnet ist.

9. Verfahren zur Steuerung eines Verbrennungsmotors mit Fremdzündung, umfassend einen oder mehrere Zylinder (1) und jeweilige Kolben, die sich innerhalb der Zylinder zwischen einem OT und einem UT bewegen und betriebsmäßig mit einer Kurbelwelle verbunden sind, wobei besagter Motor konfiguriert ist, um in jedem Betriebszyklus in jedem Zylinder aufeinanderfolgende Ansaug-, Verdichtungs-, Expansions- und Auslassphasen zu betätigen,
wobei der Motor für jeden Zylinder umfasst:
- einen ersten Ansaugkanal (3A) und einen zweiten Ansaugkanal (3B), die in den Zylinder führen und konfiguriert sind, um Luft mit demselben Druck aufzunehmen,
- ein erstes Einlassventil (VA) und ein zweites Einlassventil (VB), die dem Zylinder (1) zugeordnet sind, um den Eintritt eines Ansaugluftstroms in den Zylinder aus dem ersten Ansaugkanal (3A) bzw. dem zweiten Ansaugkanal (3B) während jedes Betriebszyklus des Zylinders zu steuern,
- eine Betätigungsvorrichtung (6) zum Betätigen besagten ersten Einlassventils (VA) und besagten zweiten Einlassventils (VB),
- ein Kraftstoffversorgungssystem, das mindestens einen Injektor umfasst, der jedem Zylinder zugeordnet ist, und konfiguriert und angeordnet ist, um Kraftstoff in einen Brennraum zu liefern, der innerhalb des jeweiligen Zylinders definiert ist, während jedes Betriebszyklus des Zylinders, und
- eine Zündkerze, die jedem Zylinder zugeordnet ist,
wobei besagtes Verfahren umfasst:
- Bereitstellen, mittels besagter Betätigungsvorrichtung zum Betätigen besagten ersten Einlassventils (VA) und besagten zweiten Einlassventils (VB), in jedem Betriebszyklus des Zylinders, zumindest unter bestimmten Motorbetriebsbedingungen, einer ersten Öffnungsperiode, in der beide Einlassventile (VA, VB) geöffnet sind, und einer zweiten Öffnungsperiode, in der nur ein erstes Einlassventil (VA) der besagten zwei Einlassventile geöffnet ist, während das zweite Einlassventil (VB) geschlossen bleibt,
- Durchführen einer Kraftstoffeinspritzung in jedem Betriebszyklus jedes Zylinders nach besagter zweiten Öffnungsperiode, wenn sich der Kolben des jeweiligen Zylinders vom UT in Richtung OT aufwärts bewegt, mittels eines Injektors, der im Wesentlichen in der Mitte des jeweiligen Brennraums angeordnet ist,
wobei besagtes Verfahren **dadurch gekennzeichnet ist, dass**:
- in besagter ersten Öffnungsperiode die beiden Einlassventile (VA, VB) öffnen, wenn sich der Kolben des jeweiligen Zylinders in der Nähe des OT befindet, und schließen, wenn sich der Kolben an einem Zwischenpunkt im Abstieg vom OT zum UT befindet,
- in besagter zweiten Öffnungsperiode besagtes erstes Einlassventil (VA) öffnet, wenn sich der Kolben des jeweiligen Zylinders in der Nähe des UT befindet, und schließt, wenn sich der Kolben vom UT in Richtung OT aufwärts bewegt.

10. Verfahren nach Anspruch 9, **dadurch gekennzeichnet, dass** es das Durchführen einer zusätzlichen Kraftstoffeinspritzung zwischen der ersten Öffnungsperiode und der zweiten Öffnungsperiode umfasst.

11. Verfahren nach Anspruch 10, **dadurch gekennzeichnet, dass** besagte zusätzliche Kraftstoffeinspritzung so durchgeführt wird, dass ein Gemisch mit einem Luft-Kraftstoff-Verhältnis von mindestens dem 1,6-fachen des stöchiometrischen Verhältnisses erzeugt wird, während die Kraftstoffeinspritzung nach der zweiten Öffnungsperiode so durchgeführt wird, dass ein Teil des Gemischs innerhalb der Drallströmung ein Luft-Kraftstoff-Verhältnis im Wesentlichen in Höhe des stöchiometrischen Wertes aufweist.

12. Verfahren nach Anspruch 10, **dadurch gekennzeichnet, dass** es das Einleiten von AGR in den Zylinder umfasst, um das Gemisch zu verdünnen.

13. Verfahren nach Anspruch 12, **dadurch gekennzeichnet, dass** der gesamte Zylinder von einem Luft-Kraftstoff-Gemisch gemäß einem stöchiometrischen Verhältnis oder gemäß einem höheren als dem stöchiometrischen Verhältnis eingenommen wird und dass AGR in einem Prozentsatz zwischen 25 % und 35 % des Gemischvolumens hinzugefügt wird.

14. Verfahren nach Anspruch 11, **dadurch gekennzeichnet, dass** ein Prozentsatz zwischen 80 % und 90 % der gesamten Kraftstoffmasse durch besagte zusätzliche Kraftstoffeinspritzung eingebracht wird.

15. Verfahren nach Anspruch 10, **dadurch gekennzeichnet, dass** mindestens 80 % der Kraftstoffmasse durch eine oder mehrere Injektorvorrichtungen eingebracht werden, die in den Ansaugkanälen (3A, 3B) stromaufwärts der Einlassventile (VA, VB) angeordnet sind.

## Revendications

1. Moteur à combustion interne à allumage commandé, comprenant un ou plusieurs cylindres (1) et des pistons respectifs coulissant à l'intérieur des cylindres entre un PMH et un PMB et connectés fonctionnellement à un vilebrequin, ledit moteur étant configuré pour mettre en œuvre des phases successives d'admission, de compression, de détente et d'échappement pendant chaque cycle de fonctionnement dans chaque cylindre,
dans lequel le moteur comprend, pour chaque cylindre :
- un premier conduit d'admission (3A) et un second conduit d'admission (3B) débouchant dans le cylindre et configurés pour recevoir de l'air à la même pression,
- une première soupape d'admission (VA) et une seconde soupape d'admission (VB) associées au cylindre (1), pour contrôler l'entrée d'un flux d'air d'admission dans le cylindre à partir du premier conduit d'admission (3A) et du second conduit d'admission (3B), respectivement, pendant chaque cycle de fonctionnement du cylindre,
- un dispositif d'actionnement (6) pour actionner ladite première soupape d'admission (VA) et ladite seconde soupape d'admission (VB),
- un système d'alimentation en carburant comprenant au moins un injecteur associé à chaque cylindre, et configuré et agencé pour fournir du carburant à une chambre de combustion définie à l'intérieur du cylindre respectif, pendant chaque cycle de fonctionnement du cylindre, et
- une bougie d'allumage associée à chaque cylindre,
dans lequel :
- ledit dispositif d'actionnement pour actionner ladite première soupape d'admission (VA) et ladite seconde soupape d'admission (VB) est configuré pour fournir, dans chaque cycle de fonctionnement du cylindre, au moins sous certaines conditions de fonctionnement du moteur :
- une première période d'ouverture, dans laquelle les deux soupapes d'admission (VA, VB) sont ouvertes et une seconde période d'ouverture, dans laquelle seule une première soupape d'admission (VA), desdites deux soupapes d'admission, est ouverte, tandis que la seconde soupape d'admission (VB) reste fermée,
- ledit injecteur est agencé sensiblement au centre de la chambre de combustion respective,
- ledit système d'alimentation en carburant est configuré pour effectuer au moins une injection de carburant, via ledit injecteur, dans chaque cycle de fonctionnement de chaque cylindre, après ladite seconde période d'ouverture, lorsque le piston du cylindre respectif monte du PMB vers le PMH,
ledit moteur étant **caractérisé en ce que** ledit dispositif d'actionnement pour actionner ladite première soupape d'admission (VA) et ladite seconde soupape d'admission (VB) est configuré de telle sorte que :
- dans ladite première période d'ouverture, les deux soupapes d'admission (VA, VB) s'ouvrent lorsque le piston du cylindre respectif est proche du PMH et se ferment lorsque le piston est à un point intermédiaire dans la descente du PMH vers le PMB,
- dans ladite seconde période d'ouverture, ladite première soupape d'admission (VA) s'ouvre lorsque le piston du cylindre respectif est au voisinage du PMB, et se ferme lorsque le piston monte du PMB vers le PMH.

2. Moteur selon la revendication 1, **caractérisé en ce que** ledit système d'alimentation en carburant est configuré pour effectuer une injection de carburant supplémentaire avant la seconde période d'ouverture.

3. Moteur selon la revendication 2, **caractérisé en ce que** ladite injection de carburant supplémentaire est effectuée de manière à générer un mélange avec un rapport air/carburant s'élevant à au moins 1,6 fois le rapport stoechiométrique, tandis que l'injection de carburant après la seconde période d'ouverture est effectuée de telle sorte qu'une partie du mélange à l'intérieur d'un flux tourbillonnaire ait un rapport air/carburant s'élevant sensiblement à la valeur stoechiométrique.

4. Moteur selon la revendication 1, **caractérisé en ce que** ladite au moins une injection de carburant est effectuée à un angle de vilebrequin dans une plage comprise entre 670° et 710°, où un angle de vilebrequin de 360° correspond au Point Mort Haut au début de la phase d'admission.

5. Moteur selon la revendication 3, **caractérisé en ce que** ledit système d'alimentation en carburant est configuré pour effectuer l'injection de carburant supplémentaire entre un angle de vilebrequin de 420° et un angle de vilebrequin de 550°, où un angle de vilebrequin de 360° correspond au Point Mort Haut au début de la phase d'admission.

6. Moteur selon la revendication 1, dans lequel le dispositif d'actionnement pour actionner les soupapes d'admission est un dispositif d'actionnement hydraulique à commande électronique (8) ou un dispositif avec des actionneurs électromagnétiques ou électropneumatiques et est configuré pour modifier, dans ladite seconde période d'ouverture, l'angle de vilebrequin auquel la première soupape d'admission s'ouvre et/ou l'angle de vilebrequin auquel la première soupape d'admission se ferme et/ou la levée de la soupape d'admission, en fonction de la charge du moteur et de la vitesse du moteur.

7. Moteur selon la revendication 1, **caractérisé en ce que** l'injecteur associé à chaque cylindre est agencé au centre de la chambre de combustion associée au cylindre.

8. Moteur selon la revendication 1, **caractérisé en ce qu'**avec chaque cylindre est associée une bougie d'allumage agencée près du centre de la chambre de combustion.

9. Procédé pour commander un moteur à combustion interne à allumage commandé, comprenant un ou plusieurs cylindres (1) et des pistons respectifs coulissant à l'intérieur des cylindres entre un PMH et un PMB et connectés fonctionnellement à un vilebrequin, ledit moteur étant configuré pour actionner des phases successives d'admission, de compression, de détente et d'échappement pendant chaque cycle de fonctionnement dans chaque cylindre,
dans lequel le moteur comprend, pour chaque cylindre :
- un premier conduit d'admission (3A) et un second conduit d'admission (3B) débouchant dans le cylindre et configurés pour recevoir de l'air à la même pression,
- une première soupape d'admission (VA) et une seconde soupape d'admission (VB) associées au cylindre (1), pour contrôler l'entrée d'un flux d'air d'admission dans le cylindre à partir du premier conduit d'admission (3A) et du second conduit d'admission (3B), respectivement, pendant chaque cycle de fonctionnement du cylindre,
- un dispositif d'actionnement (6) pour actionner ladite première soupape d'admission (VA) et ladite seconde soupape d'admission (VB),
- un système d'alimentation en carburant comprenant au moins un injecteur associé à chaque cylindre, et configuré et agencé pour fournir du carburant à une chambre de combustion définie à l'intérieur du cylindre respectif, pendant chaque cycle de fonctionnement du cylindre, et
- une bougie d'allumage associée à chaque cylindre,
dans lequel ledit procédé comprend :
- fournir, au moyen dudit dispositif d'actionnement pour actionner ladite première soupape d'admission (VA) et ladite seconde soupape d'admission (VB), dans chaque cycle de fonctionnement du cylindre, au moins sous certaines conditions de fonctionnement du moteur, une première période d'ouverture, dans laquelle les deux soupapes d'admission (VA, VB) sont ouvertes, et une seconde période d'ouverture, dans laquelle seule une première soupape d'admission (VA), desdites deux soupapes d'admission, est ouverte, tandis que la seconde soupape d'admission (VB) reste fermée,
- effectuer une injection de carburant dans chaque cycle de fonctionnement de chaque cylindre, après ladite seconde période d'ouverture, lorsque le piston du cylindre respectif monte du PMB vers le PMH, au moyen d'un injecteur qui est agencé sensiblement au centre de la chambre de combustion respective,
ledit procédé étant **caractérisé en ce que** :
- dans ladite première période d'ouverture, les deux soupapes d'admission (VA, VB) s'ouvrent lorsque le piston du cylindre respectif est proche du PMH et se ferment lorsque le piston est à un point intermédiaire dans la descente du PMH vers le PMB,
- dans ladite seconde période d'ouverture, ladite première soupape d'admission (VA) s'ouvre lorsque le piston du cylindre respectif est au voisinage du PMB, et se ferme lorsque le piston monte du PMB vers le PMH.

10. Procédé selon la revendication 9, **caractérisé en ce qu'**il comprend l'exécution d'une injection de carburant supplémentaire entre la première période d'ouverture et la seconde période d'ouverture.

11. Procédé selon la revendication 10, **caractérisé en ce que** ladite injection de carburant supplémentaire est effectuée de manière à générer un mélange avec un rapport air/carburant s'élevant à au moins 1,6 fois le rapport stoechiométrique, tandis que l'injection de carburant après la seconde période d'ouverture est effectuée de telle sorte qu'une partie du mélange à l'intérieur du flux tourbillonnaire ait un rapport air/carburant s'élevant sensiblement à la valeur stoechiométrique.

12. Procédé selon la revendication 10, **caractérisé en ce qu'**il comprend l'introduction d'EGR dans le cylindre pour diluer le mélange.

13. Procédé selon la revendication 12, **caractérisé en ce que** le cylindre entier est occupé par un mélange air/carburant selon un rapport stoechiométrique ou selon un rapport supérieur au rapport stoechiométrique, et que l'EGR est ajouté dans un pourcentage compris entre 25% et 35% du volume du mélange.

14. Procédé selon la revendication 11, **caractérisé en ce qu'**un pourcentage compris entre 80% et 90% de la masse totale de carburant est introduit par ladite injection de carburant supplémentaire.

15. Procédé selon la revendication 10, **caractérisé en ce qu'**au moins 80% de la masse de carburant est introduite par un ou plusieurs dispositifs d'injection situés dans les conduits d'admission (3A, 3B), en amont des soupapes d'admission (VA, VB).
